# EUROPEAN PATENT APPLICATION

(11) **EP 4 715 419 A2**
(43) Date of publication of application: **25.03.2026**
(21) Application number: 25387186.7
(22) Date of filing: 26.11.2025
(51) Int. Cl.: G01S 7/00

(54) **FREE-SPACE TRANSMISSION OR RECEPTION OF A SYNCHRONISATION SIGNAL FOR DCR AUTOMOTIVE RADAR**

(71) Applicant: NXP B.V., 5656 AG Eindhoven (NL); Technische Universiteit Delft, 2628 CN Delft (NL)
(72) Inventor: BOSMA, Sjoerd, 5656AG Eindhoven (NL); CARLUCCIO, Giorgio, 5656AG Eindhoven (NL); DORIS, Konstantino, 5656AG Eindhoven (NL); BESCHOOR PLUG, Nadine Elisabeth, 5656AG Eindhoven (NL); LLOMBART JUAN, Nuria, 5656AG Eindhoven (NL)
(74) Representative: Hardingham, Christopher Mark

(57) **Abstract**

Radar module assemblies and systems for an automotive distributed coherent radar, DCR, system are disclosed in which the radar module assembly comprises: a radar module including processing circuitry for generating a plurality of radar signals based on a signal at a carrier frequency; a first major surface, having a plurality of antennae thereon, each configured to be fed with a respective one of the plurality of radar signals through a respective waveguide feed and to transmit the respective one of the plurality of radar signals; a launcher configured to launch a synchronization signal from the module, wherein the synchronisation signal is based on the carrier frequency; and an electromagnetic lens on a side face of the radar module and configured to focus the synchronization signal into an inter-module direction.

## Description

### Field

The present disclosure relates to automotive distributed, coherent radar, (DCR) modules and systems.

### Background

For automotive radar applications, distributed, coherent radar (DCR is becoming of increasing interest and importance. The focusing and other properties of a radar module are constrained by the physical size of the antenna array. A distributed coherent system can increase the physical separation between individual antennae, by locating them in different modules. In turn, the individual modules can be smaller, and the angular resolution can be increased.

However, DCR systems require synchronisation in order to ensure coherence between the modules. Accurate synchronisation is important to avoid frequency offset or wander between local oscillator is of the modules. Conventionally, synchronisation is achieved by means of wired communication, and because of the attenuation at higher frequencies, the wired communication is typically implemented at an intermediate frequency, which is lower than the carrier frequency. However, synchronising at lower frequencies results in a penalty of the radar system's performance.

It has been proposed to connect the modules by means of dielectric waveguides, either dielectric or air-filled. However, use of rigidly waveguides reduces the flexibility and adaptability of the system and requires the relative position of the modules to be predetermined a priori. Flexible cables may be used, but these increase system cost or have too high losses to ensure adequate synchronisation.

### Summary

According to a first aspect of the present disclosure, there is provided a radar module assembly for an automotive distributed coherent radar, DCR, system, the radar module assembly comprising: a radar module including processing circuitry for generating a plurality of radar signals based on a signal at a carrier frequency; a first major surface, having a plurality of antennae thereon, each configured to be fed with a respective one of the plurality of radar signals through a respective waveguide feed and to transmit the respective one of the plurality of radar signals; a launcher configured to launch a synchronization signal from the module, wherein the synchronisation signal is based on the carrier frequency; and an electromagnetic lens on a side face of the radar module and configured to focus the synchronization signal into an inter-module direction.

In one or more embodiments, the carrier frequency is one of within a range of 76-81 GHz, and within a range of 134-148.5 GHz. In one or more embodiments, the synchronization signal is a copy of a one of the one or more radar signals.

In one or more such embodiments, the processing circuitry comprises a radar signal generator and a directional coupler in a transmission path between the radar signal generator and a one of the plurality of antennae, and wherein the synchronization signal is provided at an output of the directional coupler.

In one or more embodiments, the processing circuitry comprises a local oscillator, LO, interface and the synchronisation signal is a LO signal.

In one or more embodiments, the radar module assembly further comprises one or more further electromagnetic lenses on the side face, each configured to focus a respective further synchronisation signal transmitted from the radar module in the inter-module direction. In some such embodiments there may be included one or more further electromagnetic lens, each on a side face of the radar module, which may be the same or different sides faces, and configured to focus the synchronization signal into one or more further inter-module directions.

In one or more embodiments, each respective further synchronization signal is a copy of a same one of the one or more radar signals. In one or more such embodiments, each respective further synchronization signals is a copy of different one of the one or more radar signals.

In one or more embodiments, the processing circuitry further comprises a modulator configured to modulate the synchronization signal for transmitting data in the synchronization signal.

According to a second aspect of the present disclosure, there is provided a first radar module assembly being a radar module according as mentioned above and wherein the signal at a carrier frequency is a first module carrier signal; and a second radar module assembly, the second radar assembly module comprising: a second-module including second processing circuitry; a second-module first major surface, having a plurality of second-module antennas therein, each configured to receive a respective reflected radar signal and to feed the respective reflected radar signal to the second processing circuit through a respective second-module waveguide feed; a second-module electromagnetic lens on a second-module side face configured to focus the synchronization signal received from the first radar module into a receive-antenna.

In one or more embodiments, the signal at a carrier frequency is a first module carrier signal, and the second processing circuitry is configured to synchronize a phase and a frequency of a local carrier signal with first module carrier signal.

In one or more such embodiments, the first module carrier signal is derived from a first local oscillator signal in the first module processing circuitry. In one or more such embodiments, the second module processing circuitry is configured to generate a second local oscillator signal matched in frequency and phase to the first local oscillator signal.

In one or more embodiments, the synchronization signal is matched in frequency and phase to the first local oscillator signal. In one or more embodiments, the second module processing circuitry is configured demodulate the synchronization signal, to receive the data for controlling the second module processing circuitry.

These and other aspects of the invention will be apparent from, and elucidated with reference to, the embodiments described hereinafter.

### Brief description of Drawings

Embodiments will be described, by way of example only, with reference to the drawings, in which
FIG. 1 illustrates an example automotive DCR system in a vehicle;
FIG. 2 illustrates the general concept of DCR, as applied to a system with two radar modules;
FIG. 3 shows two radar modules according to one or more embodiments of the present disclosure;
FIG. 4 shows a radar module prior to assembly with a set of electromagnetic lens feeds and assembly features;
FIG. 5, shows a section through an electromagnetic lens or electromagnetic lens array;
FIG. 6, shows, schematically, in plan view, a DCR module assembly;
FIG. 7 shows an isometric view of the DCR module assembly;
FIG.s 8 through 11 show configurations of synchronisation signals according to various embodiments; and
FIG. 12 illustrates, schematically, calculated distribution losses and interference associated with wireless distribution of the synchronisation signal.

It should be noted that the Figures are diagrammatic and not necessarily drawn to scale. Relative dimensions and proportions of parts of these Figures may be shown exaggerated or reduced in size, for the sake of clarity and convenience in the drawings. The same reference signs are generally used to refer to corresponding or similar features in modified and different embodiments

### Detailed description of embodiments

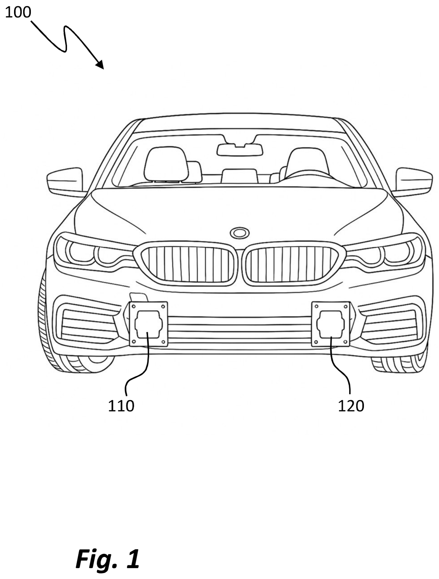

FIG. 1 illustrates an example automotive DCR system in a vehicle 100. The system includes two or more radar modules, such as those shown at 110 and 120, which are positioned in a fixed relationship relative to the vehicle. The DCR system may further include a control unit or other central processor located within the vehicle (not shown in this example). The two or more radar modules 110 and 120 are in a fixed relationship and orientation to each other. In the example of a forward facing radar such as that shown, the modules each have a first major surface which is forward-facing (from the vehicle's perspective), and side faces which are orthogonal thereto. The first major surfaces of each of the modules have a plurality of antennas thereon or thereat, for transmitting and/or receiving radar signals.

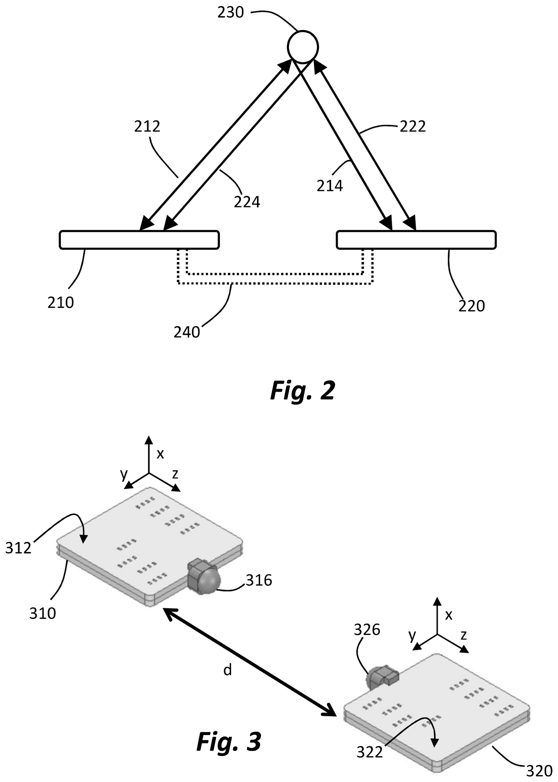

FIG. 2 illustrates the general concept of DCR, as applied to a system with two radar modules. The figure shows a first module 210 and a second module 220 each of which include multiple antennas on a first major surface thereof. In a conventional radar system, the radar modules 210 and 220 each transmits radar signals which may be reflected off a target 230 and received at the same radar module, as shown by "out-and-return" signals 212 (for first module 210), and 222 (for second module 220). In a DCR system, however the signals transmitted by one module are also received and processed by the other module or modules. Thus, for the system shown in FIG. 2, the signal transmitted from the first module 210 and reflected from the target 230 is also received by the second module 220, as shown at 214. Similarly, the reflection 224 from the signal 222 transmitted from the second module 220 is received by the first module 210. As will be familiar to those skilled in the art of radar systems, differences in phase (and-/or frequency for frequency modulated radar signals), between reflected signals from a target received at different antennas may be used in order to provide an indication of, for instance, the angle of arrival of the reflected signal. In DCR systems, this concept is extended to using received signals at different modules instead of just at different antennas within the same module.

Including antennas in different modules allows the user to have a greatly increased distance between antennas which significantly increases the size of the "synthetic aperture". However, in order to take advantage of this more widely spaced sets of receive antennas, the modules require to each be aware of the phase of the transmitted signal (or, in the alternative, the phase of the reflected signal as received at one of the antennas). This has been achieved by means of a connection such as a waveguide connection between the modules, along which a reference signal is transmitted. The reference signal may be at a lower frequency then the transmitted radar signals; however use of signals at lower frequency results in noise being added to the system, for example as the frequency is up-converted to the transmitted frequency. The signal is typically, thus, transmitted at the same frequency as the radar signal. In the case of frequency modulated radar signals having "chirps" such as is commonly used in automotive radar (that is to say, frequency modulated continuous wave - FMCW radar), the reference signal, which may also be referred to as a synchronisation signal, maybe a local oscillator (LO) signal at a single frequency, or may be a frequency-modulated signal such as a copy of the transmitted "chirp".

The operating frequencies of automotive DCR systems are typically around 77 GHz or 140 GHz, (with chirps resulting in about 0.5GHz deviation from the base, or LO, frequency). The relatively high attenuation in free space of signals transmitted at such frequencies (compared with lower frequency signals), and undesired scattering of the signal which occurs in the vicinity of the antennas' location (e.g., behind the bumper) and which interferes with the direct desired link signal (and in particular, with its phase) when antennas do not radiate a focused beam, renders free space transmission of the synchronisation signal to be impractical. However, the present inventors have appreciated that, due to the fixed relationship between the radar modules, it may be possible to focus a transmitted synchronisation signal between two or more modules, and thereby enable free-space transmission.

FIG. 3 shows two radar modules, 310, 320, according to one or more embodiments of the present disclosure. The modules are in a fixed relationship with each other, and each have a first major surface, 312, 322 which is generally forward facing (in the x direction as shown). On or at the first major surface, 312, 322 of each module are at least one set of antennas. As shown, each module may have one or more sets of four antennas; however, in other embodiments each set of antennas may include more or fewer than four antennas, and they may be equally spaced as shown or unequally spaced (in particular in applications using "sparse arrays"). Although the sets of antennas may be, as shown, distributed vertically (that is to say, in the y-direction) when mounted on a vehicle, in other applications the sets of antennas may be distributed horizontally (that is to say, in the z-direction).

Each module includes at least one antenna on or at a side face of the module. The at least one antenna on the side face is not visible in FIG. 3, because it is hidden by a corresponding electromagnetic lens 316, 326. Electromagnetic lenses 316, 326 (which may also be referred to as dielectric lenses) are aligned with the corresponding antenna on the side face and arranged to focus the signal transmitted from or received by the antenna. In one non-limiting example the first module 310 is configured to transmit its signal through the antenna (not shown) on or in a side face and electromagnetic lens 316 is arranged and configured to focus the signal towards the second module 320. By ensuring that the modules, and in particular the module arranged to transmit the synchronisation signal via electromagnetic lens 316, are appropriately orientated, and using a dielectric lens, the synchronisation signal maybe effectively communicated between modules.

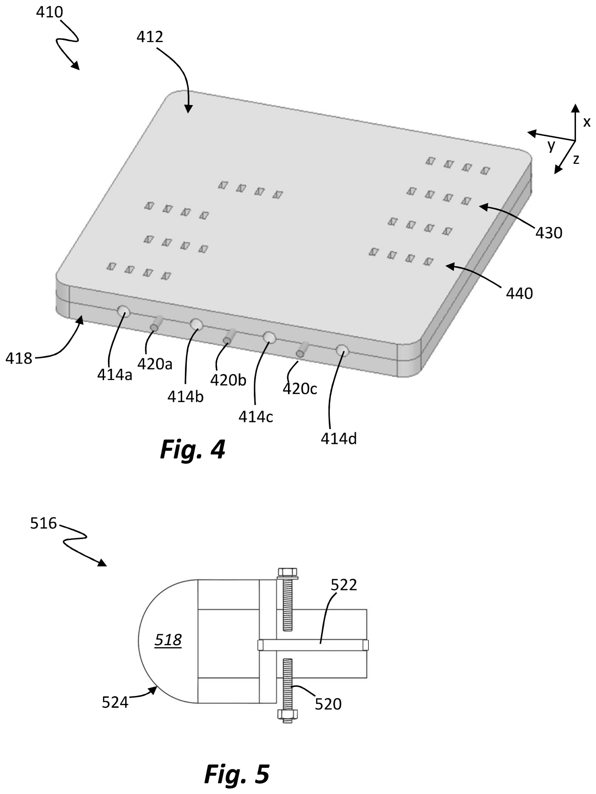

Turning now to FIG. 4, this shows a radar module 410 prior to assembly with a set of electromagnetic lenses. As has already been described above, a first major surface of the module has multiple sets of antennas 430, 440 located thereat or thereon. On or at a side face 418 of the module are located one or more antennas 414 that are used to illuminate the lens. In the example shown there are four such antennas 414a, 414b, 414c and 414d. In order to accurately position the lens or lenses relative to the antennas, the module may be provided with locating structures 420. In the example shown, the locating structures 420 take the form of dowels 420a, 420b and 420c. The skilled person will readily appreciate that alternative structures may be used such as rectangular lugs, pins, indents and the like.

Turning now to FIG. 5, this shows, schematically, a section through an electromagnetic lens 516 or electromagnetic lens array prior to being assembled with the module 410. The electromagnetic lens array 516 comprises a dielectric lens section 518, together with fastening means (which may be as shown screws 520, or other suitable fasteners or fastening methods, such as clips, bolts or the like, or glue and the like). The lens may include a waveguide section 522 as shown, or may be solid. The electromagnetic lens or electromagnetic lens array may have a hemispherical, elliptical, flat, or other suitable surface 524 in order to appropriately focus the signal from the antenna in a direction which is parallel with the first major surface. That is to say, the synchronisation signal is focused perpendicularly to the normal to the major surface. Put another way, the synchronisation signal is focused to be directed in the same plane as the set of antennas on the module. By thus aligning and focusing the signal to be transmitted from the module (and received by the second module) in the same plane, the round- trip distances to a centrally located target object 230 from either module to the other module may be insured to be equal.

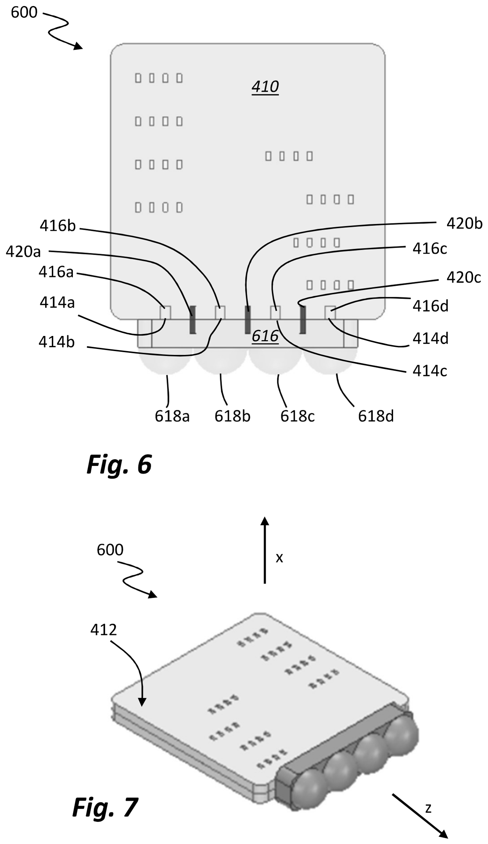

Turning now to FIG. 6, this shows, schematically, in plan view, a DCR module assembly 600 having a radar module 410 assembled with an electromagnetic lens array 616. The lens array comprises a plurality, in this case 4, electromagnetic lenses 618a, 618b, 618c and 618d, which are aligned with antenna lens feeds 414a, 414b, 414c, and 414d respectively by means of locating dowels 420a, 420b, and 420c. The antennas are fed with one or more synchronisation signals through feed lines 416a, 416b, 416c and 416d.

FIG. 7 shows an isometric view of the DCR module assembly 600 from which it can be clearly seen that the module assembly is arranged such that the electromagnetic lenses 618a, 618b, 618c and 618d are arranged focus the one or more synchronisation signals in a direction z, in the plane which is the same as, or parallel with, the first major surface 412, and generally perpendicular to the radar normal direction x.

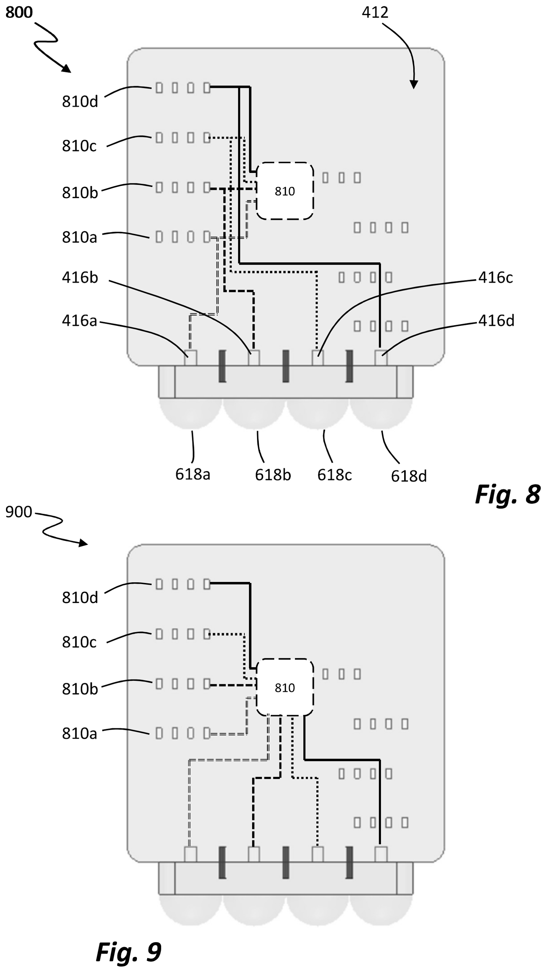

FIG.s 8 through 11 show different configurations of the one or more synchronisation signals according to various embodiments of the present disclosure. In particular, for the radar module assembly 800 shown in FIG. 8, the processing circuitry, (which is illustrated symbolically in the figure as integrated circuit 810) may provide separate radar signals to be transmitted by antennas or group of antennas 810a, 810b, 810c and 810d on or at the first major surface 412. It will be appreciated, that although four channels are shown in the FIGs, the present disclosure is not limited thereto, and any other suitable number may be used. A part of each of the radar signals are coupled to respective feeds or feed lines 416a, 416b, 416c and 416d by means of directional couplers. The coupled parts of each signal maybe a small fraction, corresponding to -10dB to -30dB. The coupled part is for transmission from respective antennas and focusing by the respective electromagnetic lenses 618a, 618b, 618c and 618d to corresponding electromagnetic lenses on a corresponding receiver module.

In the radar module assembly 900 of FIG. 9, the processing circuitry 810 includes dedicated TX channels to transmit the synchronisation signals. In such environments, the synchronisation signal or signals which are transmitted through the electromagnetic lenses 618a, 618b, 618c and 618d may each be the same or may be different. Providing the same signal through each of the focused antennae may increase the gain of the synchronisation signal, which may be particularly convenient in applications in which the radar module assemblies are widely spaced apart.

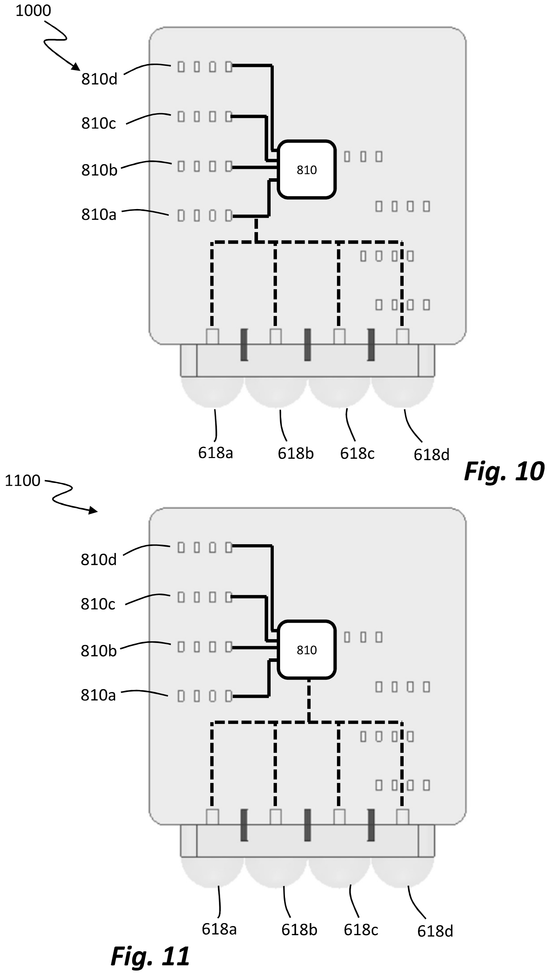

A third arrangement or configuration is illustrated in FIG. 10. In radar module assemblies 1000 such as that shown in FIG. 10, a single transmit channel may be coupled, for example by means of a directional copper, to the antennas focused by means of electromagnetic lenses 618a, 618b, 618c and 618d. Such embodiments may have advantages of having a particularly high level of signal coherency since the synchronisation signal is a direct copy of one of the transmitted radar signals, ands providing the same signal to all of the lenses in the electromagnetic lens array may provide high level of gain to enable the signal to be effectively received at the corresponding receiver module.

A fourth arrangement or configuration is illustrated in FIG. 11. In radar module assemblies 1100 such as that shown in FIG. 11, the external LO interface output signal is coupled to the receiver sensor wirelessly using the electromagnetic lens array 618a, 618b, 618c and 618d. In such environments, the multiple lens within electromagnetic lens array, or even the complete array can be used to coherently transmit the LO signal. Of course, it will be appreciated that a combination of the above arrangements or configurations shown in FIGs 8 to 11 may, alternatively, be used.

It will be appreciated, that, whereas in the above figures only two module assemblies are shown, the disclosure extends to more than two such modules, which may then be arranged in various ways. For example, there could be one leader or transmitter module and multiple followers or receiver module, such that the leader includes multiple lens arrays, each for transmitting, on the same or different side faces, and the followers each include a single lens array for receiving. Alternatively, and without limitation, the module assemblies could be arranged in a cascade or daisy-chain configuration, in which at least one of the modules is arranged having two lens arrays, one of which is arranged to act as a receiver array, and the other arranged to act as a transmitter array.

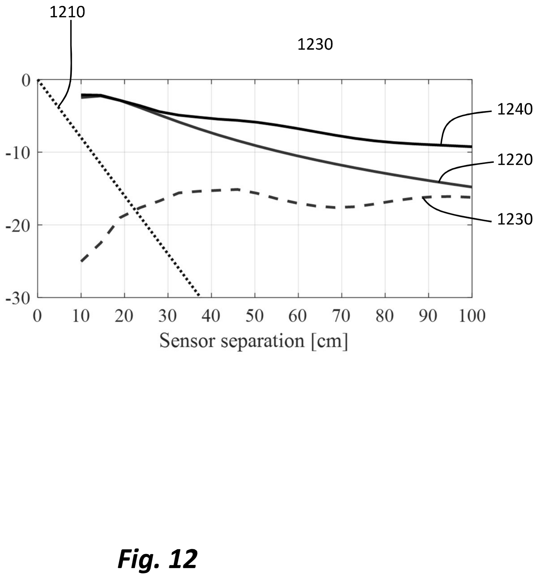

FIG. 12 illustrates, schematically, calculated distribution losses and interference associated with wireless distribution of the synchronisation signal, relative to that of a microstrip line signal in a PCB material (which is typically around 0.8 dB/cm) for an example application of a 77 GHz signal using an array of four electromagnetic lenses with three centimetre diameter each. The microstrip line loss is shown at 1210. The loss shown for transmission between a single lens to a single lens is shown at 1220. The interference received by the single lens from the other 3 lenses before additional signal processing is shown at 1230. The loss shown from a lens array to a lens array (operated coherently) is shown at 1240. As can be seen, use of the focused lens or lens array results in a better signal distribution than would be the case through a microstrip line or other physical distribution.

From reading the present disclosure, other variations and modifications will be apparent to the skilled person. Such variations and modifications may involve equivalent and other features which are already known in the art of DCR, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A radar module assembly for an automotive distributed coherent radar, DCR, system, the radar module assembly comprising:
a radar module including processing circuitry for generating a
plurality of radar signals based on a signal at a carrier frequency;
a first major surface, having a plurality of antennae thereon, each configured to be fed with a respective one of the plurality of radar signals through a respective waveguide feed and to transmit the respective one of the plurality of radar signals;
a launcher configured to launch a synchronization signal from the module, wherein the synchronisation signal is based on the carrier frequency; and
an electromagnetic lens on a side face of the radar module and configured to focus the synchronization signal into an inter-module direction.

2. The radar module assembly of claim 1, wherein
the carrier frequency is one of within a range of 76-81 GHz, and within a range of 134-148.5 GHz.

3. The radar module assembly of any preceding claim, wherein
the synchronization signal is a copy of a one of the one or more radar signals.

4. The radar module assembly of claim 3, wherein
the processing circuitry comprises a radar signal generator and a directional coupler in a transmission path between the radar signal generator and a one of the plurality of antennae, and wherein
the synchronization signal is provided at an output of the directional coupler.

5. The radar module assembly of any of claims 1 to 3, wherein
the processing circuitry comprises a local oscillator, LO, interface and the synchronisation signal is a LO signal.

6. The radar module assembly of any preceding claim, further comprising
one or more further electromagnetic lenses on the side face, each configured to focus a respective further synchronisation signal transmitted from the radar module in the inter-module direction.

7. The radar module assembly of claim 6, wherein
each respective further synchronization signal is a copy of a same one of the one or more radar signals.

8. The radar module assembly of claim 6, wherein
each respective further synchronization signals is a copy of different one of the one or more radar signals.

9. The radar module assembly of any preceding claim, wherein
the processing circuitry further comprises a modulator configured to modulate the synchronization signal for transmitting data in the synchronization signal.

10. A DCR system, comprising:
a first radar module assembly being a radar module according to any preceding claim and wherein the signal at a carrier frequency is a first module carrier signal; and
a second radar module assembly, the second radar assembly module comprising:
a second-module including second processing circuitry;
a second-module first major surface, having a plurality of second-module antennas therein, each configured to receive a respective reflected radar signal and to feed the respective reflected radar signal to the second processing circuit through a respective second-module waveguide feed; and
a second-module electromagnetic lens on a second-module side face configured to focus the synchronization signal received from the first radar module into a receive-antenna.

11. The DCR system of claim 10, wherein the signal at a carrier frequency is a first module carrier signal, and the second processing circuitry is configured to synchronize a phase and a frequency of a local carrier signal with first module carrier signal.

12. The DCR system of claim 11, wherein the first module carrier signal is derived from a first local oscillator signal in the first module processing circuitry.

13. The DCR system of claim 12, wherein the second module processing circuitry is configured to generate a second local oscillator signal matched in frequency and phase to the first local oscillator signal.

14. The DCR system of claim 12, wherein the synchronization signal is matched in frequency and phase to the first local oscillator signal.

15. The DCR system of any of claims 10 to 14 when dependant on claim 9, wherein the second module processing circuitry is configured demodulate the synchronization signal, to receive the data for controlling the second module processing circuitry.
